# FASCICULE DE BREVET EUROPEEN

(11) **EP 2 822 830 B1**
(45) Date de publication et mention de la délivrance du brevet: **23.08.2017**
(21) Numéro de dépôt: 13707396.1
(22) Date de dépôt: 05.03.2013
(51) Int. Cl.: B60L 7/10, B60L 7/14, B60L 9/00, B60L 9/24, B60L 11/00, B60L 11/16, B60L 11/18, B61C 17/06, B61C 3/02, B60M 3/06

(54) **RÉSEAU FERROVIAIRE ÉLECTRIQUE ET PROCÉDÉ D'ÉCHANGE D'ÉNERGIE ASSOCIÉ**
ELEKTRISCHES EISENBAHNNETZWERK UND ZUGEHÖRIGES ENERGIEAUSTAUSCHVERFAHREN
ELECTRIC RAILWAY NETWORK AND ASSOCIATED ENERGY EXCHANGE METHOD

(30) Priorité: 05.03.2012 FR 1251984
(43) Date de publication de la demande: 14.01.2015
(73) Titulaire: ALSTOM Transport Technologies, 93400 Saint-Ouen (FR)
(72) Inventeur: PERIOT, Robert, F-64460 Lamayou (FR); SAIZ, José, F-65800 Aureilhan (FR); JAMET, Dominique, F-39190 Grusse (FR)
(74) Mandataire: Lavoix
(86) Numéro de dépôt international: PCT/EP2013/054379
(87) Numéro de publication internationale: WO 2013/131899

(56) Documents cités:
- DE-A1- 19 831 204

## Description

La présente invention concerne un réseau ferroviaire électrique.

Plus particulièrement, l'invention concerne un réseau ferroviaire du type comportant :
- une voie,
- une alimentation du réseau en énergie, et
- plusieurs trains, chaque train comportant :
   - des moyens de propulsion propres à générer de l'énergie électrique par freinage,
   - un système interne de stockage d'énergie électrique conçu pour le stockage d'énergie électrique en provenance des moyens de propulsion dudit train et de l'alimentation du réseau en énergie, et pour la fourniture d'énergie électrique audit train et à ladite alimentation,
   - un ensemble d'équipements auxiliaires, et
   - des moyens de raccordement du train à l'alimentation du réseau en énergie, chaque train se trouvant sous tension lorsqu'il est raccordé à l'alimentation du réseau en énergie via les moyens de raccordement, son système interne de stockage d'énergie électrique étant alors raccordé à ladite alimentation, et hors tension lorsqu'il ne l'est pas, chaque train étant propre à passer entre un état en service dans lequel son ensemble d'équipements auxiliaires est connecté à l'alimentation du réseau en énergie ou au système interne de stockage d'énergie électrique dudit train et le train est propre à se déplacer sur la voie, et un état à l'arrêt dans lequel ledit ensemble d'équipements auxiliaires est déconnecté de l'alimentation en énergie du réseau et du système interne de stockage d'énergie électrique et le train est impropre à se déplacer sur la voie.
Un tel réseau ferroviaire est connu du document DE-A-198 31 204. Le domaine de l'invention se situe dans le domaine des réseaux ferroviaires électriques, et plus particulièrement dans le domaine du freinage à récupération.

Historiquement, le freinage des trains électriques était assuré au niveau de leur système de freinage par dissipation de leur énergie cinétique en chaleur. L'intégralité de l'énergie cinétique dissipée était alors perdue.

Dans le contexte actuel de diminution de la consommation énergétique dans le domaine des transports, certains trains sont dorénavant équipés d'un système interne de stockage d'énergie interne destiné notamment à emmagasiner sous forme d'énergie électrique une partie de l'énergie cinétique dissipée lors de leur freinage. L'énergie électrique emmagasinée est ensuite réutilisée par ce même train pour assurer sa propulsion ou pour alimenter des équipements électriques qu'il comprend, ou bien renvoyée vers l'alimentation du réseau en énergie à destination d'autres trains en service et sous tension pour leur fonctionnement.

De manière connue, ce procédé d'échange d'énergie via les systèmes internes de stockage d'énergie des trains d'un réseau ferroviaire présente un certain nombre d'inconvénients.

En effet, les sources de stockage d'énergie équipant les trains ont une capacité de stockage limitée.

En outre, le système d'alimentation du réseau ferroviaire n'est pas toujours en mesure d'absorber l'énergie électrique générée par le freinage des trains, par exemple lorsqu'aucun train raccordé à l'alimentation du réseau n'est demandeur d'énergie.

Dès lors, si la source de stockage d'énergie du train est saturée, et que l'alimentation ne peut pas absorber l'énergie électrique générée, l'énergie électrique générée lors du freinage de ce train doit être intégralement dissipée sous forme de chaleur - via un dispositif de freinage rhéostatique par exemple - et est intégralement perdue.

Pour répondre à ces problèmes, la solution connue de l'homme du métier est d'augmenter la capacité de stockage en énergie du réseau.

A cet effet, une manière de procéder consiste à modifier des sous-stations raccordées à l'alimentation du réseau ferroviaire pour les rendre réversibles et/ou aptes à stocker une partie de l'énergie électrique générée par les trains en service.

Une autre manière de procéder consiste à ajouter à l'alimentation du réseau des systèmes fixes réversibles de stockage d'énergie électrique supplémentaires. Ceux-ci sont par exemple disposés le long des voies.

Toutefois, ces solutions n'apportent pas entière satisfaction.

En effet, les modifications qui doivent être apportées aux sous-stations du système d'alimentation du réseau pour les rendre réversibles présentent un coût important. L'ajout de nouvelles sources de stockage au réseau est également très coûteux.

L'un des objets de l'invention est donc d'obtenir un réseau ferroviaire présentant des capacités améliorées de stockage de l'énergie électrique générée par les trains en service pour un coût significativement diminué.

A cet effet, l'invention concerne un réseau du type précité caractérisé en ce qu'au moins l'un des trains est à la fois dans l'état à l'arrêt et sous tension, son système interne de stockage d'énergie électrique étant raccordé à l'alimentation du réseau en énergie.

Le réseau selon l'invention peut comprendre l'une ou plusieurs des caractéristiques suivantes, prise(s) isolément ou suivant toute(s) combinaison(s) techniquement possible(s) :
- dès lors que plusieurs trains du réseau ferroviaire sont en état en service, le pourcentage des trains du réseau ferroviaire à la fois dans l'état à l'arrêt et sous tension est compris entre 1% et 10%, et vaut notamment 10%.
- lors des heures de pointe du réseau ferroviaire, le pourcentage des trains du réseau ferroviaire à la fois dans l'état à l'arrêt et sous tension est compris entre 1% et 10%, et vaut notamment 5% ;
- lors des heures creuses du réseau, le pourcentage de trains du réseau ferroviaire la fois dans l'état à l'arrêt et sous tension est compris entre 5% et 10%, et vaut notamment 10% ;
- le réseau comprend au moins un emplacement de stationnement prolongé choisi parmi le groupe suivant : un atelier, un site de maintenance, un parking, un garage, un dépôt, une gare, et le ou chaque train à la fois dans état à l'arrêt et sous tension est situé dans ledit au moins un emplacement de stationnement prolongé ;
- les moyens de raccordement d'au moins l'un des trains comprennent un interrupteur pilotable propre à déconnecter les moyens de propulsion de l'alimentation du réseau en énergie et de son système interne de stockage d'énergie électrique lorsque ledit train est sous tension et en état à l'arrêt ;
- l'ensemble d'équipements auxiliaires de chaque train comprend un interrupteur commandable auxiliaire propre à connecter ledit ensemble d'équipements auxiliaires à l'alimentation du réseau en énergie et/ou au système interne de stockage d'énergie électrique d'une part, et déconnecter ledit ensemble d'équipements auxiliaires de l'alimentation du réseau en énergie et du système interne de stockage d'énergie électrique d'autre part.

En outre, l'invention a pour objet un procédé d'échange d'énergie au sein d'un réseau ferroviaire tel que défini ci-dessus, chaque train du réseau se trouvant :
- sous tension lorsqu'il est raccordé à l'alimentation du réseau en énergie via les moyens de raccordement, son système interne de stockage d'énergie électrique étant raccordé à ladite alimentation,
- hors tension lorsqu'il n'est pas raccordé à l'alimentation du réseau en énergie via les moyens de raccordement, son système interne de stockage d'énergie électrique n'étant pas raccordé à ladite alimentation,
- dans l'état en service lorsque son système d'équipements auxiliaires est connecté à l'alimentation du réseau en énergie ou à son système interne de stockage d'énergie électrique, et le train est propre à se déplacer sur la voie, ses moyens de propulsion étant propres à générer de l'énergie électrique par freinage,
- dans l'état à l'arrêt lorsque son système d'équipements auxiliaires est déconnecté de l'alimentation en énergie du réseau et de son système interne de stockage d'énergie électrique et le train est impropre à se déplacer sur la voie,
   le procédé d'échange d'énergie comprenant:
   - une étape de freinage d'un train dans l'état en service et sous tension,
   - une étape de stockage de tout ou partie de l'énergie électrique résultante du freinage dudit train dans le système interne de stockage d'énergie électrique d'un ou plusieurs train en état à l'arrêt et sous tension,
   - une étape de fourniture de tout ou partie de l'énergie stockée dans le système interne de stockage d'énergie électrique du ou de chaque train à la fois en état à l'arrêt et sous tension à un ou plusieurs autres trains en état en service du réseau ferroviaire via l'alimentation du réseau en énergie.

L'invention sera mieux comprise à la lecture de la description qui va suivre, donnée uniquement à titre d'exemple, et faite en se référant aux dessins annexés, sur lesquels :
- la Figure 1 est une représentation schématique d'un réseau ferroviaire selon l'invention ;
- la Figure 2 est un diagramme-bloc représentant un procédé d'échange d'énergie entre des trains du réseau ferroviaire de la Figure 1 ; et
- la Figure 3 est une représentation schématique d'un train d'un réseau ferroviaire selon une variante de l'invention.

Dans tout ce qui suit, le terme « train » est utilisé pour désigner indifféremment une rame de train, une rame de tramway, une rame de métro, ou tout autre élément automoteur électrique. De plus, les termes « droite » et « gauche » sont utilisés en référence aux Figures et non de façon limitative.

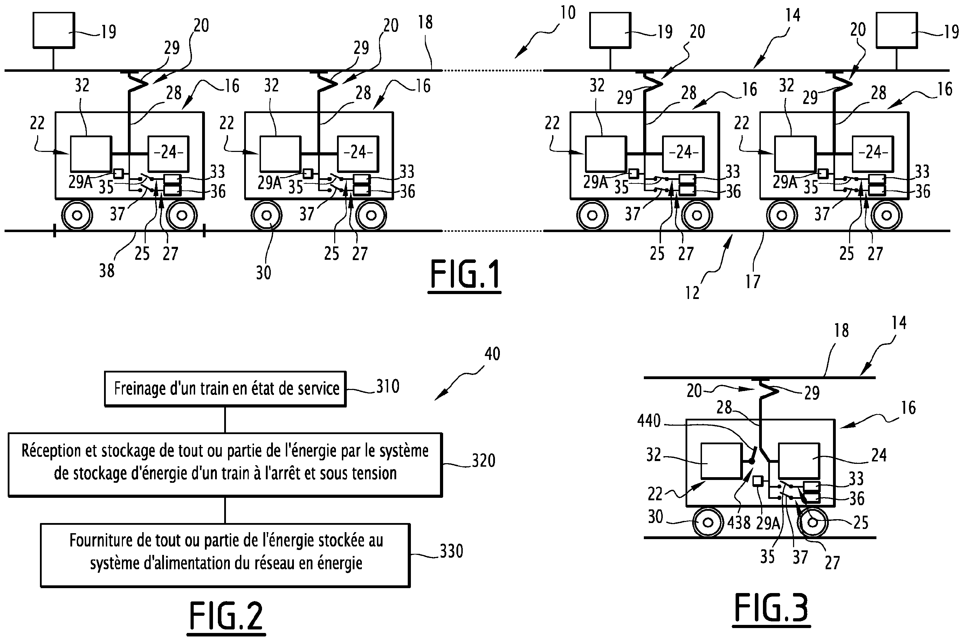

En référence à la Figure 1, le réseau ferroviaire 10 selon l'invention comprend une voie 12, une alimentation du réseau en énergie 14 et plusieurs trains 16.

La voie 12 comprend des rails 17 disposés en paires parallèles pour la circulation des trains 16.

L'alimentation du réseau en énergie 14, ci-après « alimentation 14 » est propre à alimenter les trains 16 du réseau ferroviaire 10 en énergie électrique nécessaire à leur fonctionnement, par exemple pour leur propulsion ou pour l'alimentation d'équipements de bord (éclairage, climatisation, etc..).

L'alimentation 14 comprend des sources d'énergie (non visibles), une ou plusieurs caténaires 18 et des systèmes fixes réversibles de stockage d'énergie 19.

Les caténaires 18 sont propres à permettre le raccordement électrique de chacun des trains 16 entre eux et aux sources d'énergies de l'alimentation 14.

A cet effet, une caténaire 18 est disposée au dessus de la voie 12.

Des systèmes fixes réversibles de stockage d'énergie électrique 19 sont disposés le long des voies. Ils sont raccordés aux caténaires 18 et sont propres à stocker de l'énergie électrique en provenance de l'alimentation 14 et à restituer l'énergie électrique stockée à l'alimentation 14. De tels systèmes fixes réversibles de stockage d'énergie électrique 19 sont connus de l'homme du métier.

Toujours en référence à la Figure 1, chaque train 16 comporte des moyens 20 de raccordement à l'alimentation 14, des moyens de propulsion 22 et un système interne de stockage d'énergie électrique 24. En outre, chaque train 16 comprend un ensemble d'équipements auxiliaires 25 ainsi qu'un ensemble d'équipements auxiliaires basse-tension 27, ci-après dénommés « système auxiliaire 25 » et « système basse-tension 27 » respectivement et détaillés ci-dessous.

Les moyens 20 de raccordement de chaque train 16 sont propres à permettre le transfert bidirectionnel d'énergie entre l'alimentation 14 et les différents éléments du train 16.

A cet effet, de manière connue, ces moyens 20 de raccordement comprennent des câbles 28 conducteurs d'électricité, au moins un pantographe 29 fixé sur le toit du train 16 et des moyens 29A d'actionnement du ou de chaque pantographe 29.

Le ou chaque pantographe 29 est déployable via les moyens 29A d'actionnement entre une position repliée sur le train 16 à l'écart de la caténaire 18 et une position déployée dans laquelle il est au contact de la caténaire 18.

Les câbles 28 sont propres à raccorder entre eux et à l'alimentation 14 les moyens de propulsion 22, le système interne de stockage d'énergie 24, les systèmes auxiliaire 25 et basse-tension 27, le ou chaque pantographe 29 et les moyens d'actionnement 29A, comme illustré sur la Figure 1.

Chaque train 16 est ainsi :
- sous tension lorsqu'il est raccordé à l'alimentation 14, son ou ses pantographes 29 étant en position déployée, le système interne de stockage d'énergie électrique 24 au moins étant alors raccordé à l'alimentation 14 via les moyens 20 de raccordement, ou
- hors tension lorsqu'il n'est pas raccordé à l'alimentation 14, le pantographe 29 étant en position repliée, les moyens de propulsion 22 et le système interne de stockage d'énergie électrique 24 n'étant alors pas raccordés à l'alimentation 14.

Les moyens 29A d'actionnement comprennent un compresseur alimenté par une batterie et un vérin pneumatique (non représentés).

En variante, les moyens 29A d'actionnement comprennent un moteur électrique alimenté par une batterie ou un vérin pneumatique alimenté par une réserve d'air que comprend le train 16.

Les moyens d'actionnement 29A sont propres à assurer le déploiement du pantographe 29, par exemple après un stationnement prolongé du train 16, et ce de façon indépendante des autres organes du train 16, la batterie qu'ils comprennent pouvant être rechargée en énergie électrique via l'alimentation 14 une fois le ou chaque pantographe 29 en position déployée.

Les moyens de propulsion 22 du train 16 sont propres à convertir l'énergie électrique qu'ils reçoivent en énergie cinétique lors des phases d'accélération et à convertir l'énergie cinétique du train 16 en énergie électrique lors des phases de freinage. L'énergie électrique reçue par les moyens de propulsion 22 provient de l'alimentation 14 ou du système interne de stockage d'énergie électrique 24 du train 16, comme on le verra par la suite.

A cet effet, les moyens de propulsion 22 comprennent des roues 30 coopérant avec la voie 12, ainsi qu'un bloc moteur réversible 32 solidarisés aux roues 30.

Le bloc moteur réversible 32 est propre à actionner les roues 30 lorsqu'il est alimenté en énergie électrique, ou bien freiner les roues 30 en générant un couple de freinage appliqué aux roues 30 et en fournissant de l'énergie électrique. Tout ou partie de cette énergie électrique est alors envoyée au système interne de stockage d'énergie électrique 24 du train 16 ou bien renvoyée à travers l'alimentation 14 via les moyens 20 de raccordement.

Le système interne de stockage d'énergie électrique 24 du train 16 est propre à recevoir et stocker de l'énergie électrique en provenance des moyens de propulsion 22 ou bien en provenance de l'alimentation 14. En outre, le système interne de stockage d'énergie électrique 24 est propre à restituer l'énergie stockée aux moyens de propulsion 22, à l'alimentation 14 et aux systèmes auxiliaire 25 et basse-tension 27.

A cet effet, le système interne de stockage d'énergie électrique 24 est raccordé aux moyens de propulsion 22 et aux systèmes auxiliaire 25 et basse-tension 27, et est raccordable à l'alimentation 14 et aux autres trains 16, via les moyens 20 de raccordement.

De manière connue, le système interne de stockage d'énergie électrique 24 comprend par exemple un ou plusieurs volants d'inertie, une ou plusieurs batteries de puissance et/ou un ou plusieurs ensembles supercapacitifs (non représentés).

Le système auxiliaire 25 est conçu pour permettre la préparation matérielle du train 16 conjointement au système basse-tension 27, c'est-à-dire pour rendre le train 16 propre à se déplacer sur la voie 12 et accueillir des passagers, comme on le verra par la suite.

Le système auxiliaire 25 comprend des équipements auxiliaires 33 et un interrupteur commandable auxiliaire 35 agencé entre les câbles électriques 28 et les équipements auxiliaires 33.

Les équipements auxiliaires 33 comprennent des systèmes matériels ou électriques nécessaires au déplacement du train 16. Ils comprennent par exemple des circuits de freinage des roues 30, des circuits de diagnostique des moyens 22 de propulsion, des circuits de contrôle, des circuits électroniques de commande de propulsion et de sécurité, de communication, de commande d'un disjoncteur principal que comprend le train, de ventilation et d'éclairage de secours.

L'interrupteur commandable auxiliaire 35 est propre à :
- connecter en position fermée les équipements auxiliaires 33 au système interne de stockage d'énergie électrique 24 d'une part et, d'autre part à l'alimentation 14 si le train 16 est sous tension, et
- déconnecter en position ouverte les équipements auxiliaires 33 de l'alimentation 14 et du système interne de stockage d'énergie électrique 24.

Le système basse-tension 27 est propre à permettre la préparation matérielle du train 16 conjointement au système auxiliaire 25, comme on le verra par la suite.

Le système basse-tension 27 comprend des équipements basse-tension 36 et un interrupteur commandable basse-tension 37 agencé entre les câbles électriques 28 et les équipements basse-tension 36.

Les équipements basse-tension 36 comprennent des systèmes nécessaires pour rendre le train apte à la présence de passagers. Ils comprennent par exemple un système d'éclairage du train 16, un système de climatisation de la rame, un système de commande sécuritaire des portes du train 16, de ventilation et d'affichage d'informations, de charge de batterie et de réserve d'air.

L'interrupteur commandable basse-tension 37 est propre à :
- connecter en position fermée les équipements basse-tension 36 au système interne de stockage d'énergie électrique 24 d'une part et, d'autre part à l'alimentation 14 si le train 16 est sous tension, et
- déconnecter en position ouverte les équipements basse-tension 36 de l'alimentation 14 et du système interne de stockage d'énergie électrique 24.

La connexion et le maintien de la connexion des systèmes auxiliaires 25 et basse-tension 27 à l'alimentation 14 et/ou au système interne de stockage d'énergie électrique 24 via la commande de leur interrupteur commandable 35, 37 respectif en position fermée est nécessaire pour rendre le train 16 propre au déplacement sur la voie et à l'accueil de passagers.

A noter que, dans la mesure où les équipements auxiliaires 33 comprennent les circuits de commande des moyens 22 de propulsion, le maintien en position ouverte de l'interrupteur commandable auxiliaire 35 suffit à rendre le train impropre au déplacement.

Chaque train 16 est propre à passer entre un état « à l'arrêt » et un état « en service » et inversement.

En état à l'arrêt, le système auxiliaire 25 et le système basse-tension 27 sont déconnectés de l'alimentation 14 et du système interne de stockage d'énergie électrique 24 par la commande ouverte de leurs interrupteurs commandables 35, 37 respectifs.

Ainsi, dans cet état à l'arrêt, le train 16 est impropre au déplacement sur la voie 12 et est impropre à l'accueil de passagers.

A l'inverse, en état en service, les systèmes auxiliaire 25 et basse-tension 27 sont maintenus connectés à l'alimentation 14 et/ou au système interne de stockage d'énergie électrique. Le train 16 est ainsi propre à se déplacer sur la voie 12 et à accueillir des passagers et ses moyens 22 de propulsion sont propres à générer de l'énergie électrique par freinage.

De manière connue, le passage d'un train 16 depuis un état à l'arrêt vers un état en service porte le nom de préparation matérielle.

Au cours de cette préparation matérielle, les interrupteurs commandables 35, 37 respectifs des systèmes auxiliaire 25 et basse-tension 27 sont commandés fermés, ces systèmes 25, 27 étant alors raccordés d'une part au système interne de stockage d'énergie électrique 24 et, d'autre part, à l'alimentation 14 si le train 16 est sous tension.

La mise sous tension du train 16 est alors réalisée pendant la préparation matérielle.

La durée de cette préparation matérielle est généralement supérieure à plusieurs minutes au cours desquelles l'ensemble des circuits alimentés par la batterie du train 16 est mis sous tension, dont des circuits électroniques de commande des moyens 22 de propulsion et d'auto-diagnostique.

Lorsque toutes les conditions sont réunies, une séquence de pré-charge et d'enclenchement du disjoncteur principal du train 16 est lancée.

Dans le cas de trains 16 équipés de circuits pneumatiques, un compresseur que comprend le train 16 charge une réserve d'air. Un frein d'immobilisation que comprend le train 16 n'est alors débrayable qu'une fois que la pression de la réserve d'air est suffisante pour assurer le freinage et le bon fonctionnement des suspensions du train.

Au terme de la préparation matérielle du train 16, celui-ci est se trouve en état en service et sous tension est propre au déplacement sur la voie 12 et à l'accueil de passagers.

En outre, il est alors propre à passer quasi-instantanément d'une station immobile (par exemple lors d'un arrêt commercial en gare pour la montée et la descente de passagers) à un déplacement sur la voie 12.

Le passage d'un train 16 depuis un état en service vers un état à l'arrêt porte le nom de dépréparation matérielle.

Au cours de la dépréparation matérielle, les interrupteurs commandables 35, 37 des systèmes auxiliaire 25 et basse-tension 27 sont commandés ouverts. Dès lors, les équipements auxiliaires 33 et basse-tension 36 sont portés à l'arrêt, et le train 16 redevient impropre à la présence de passagers et au déplacement sur la voie 12.

La mise hors tension du train 16 est alors réalisée pendant la dépréparation matérielle.

En vue de la dépréparation matérielle d'un train 16, le train 16 est déplacé vers un emplacement de stationnement prolongé 38 que le réseau ferroviaire 10 comprend, tel un atelier, un site de maintenance, un parking, un garage, un dépôt, une gare, etc.

Une fois la dépréparation matérielle du train 16 achevée, le train se trouve en état à l'arrêt et hors tension et est alors impropre à tout déplacement sur la voie 12 et à l'accueil de passagers tant que sa préparation matérielle n'a pas été réalisée à nouveau.

Dans un réseau ferroviaire 10 selon l'invention, au moins un train 16 se trouvant en état à l'arrêt est spécifiquement mis et maintenu sous tension sans que sa préparation matérielle n'ait eu lieu, de sorte que son système interne de stockage d'énergie 24 est raccordé à l'alimentation 14 alors que le train 16 demeure impropre au déplacement sur la voie.

En pratique, pour ce faire, la mise sous tension des circuits relatifs au fonctionnement et au diagnostique du système de stockage d'énergie interne 24 du train 16 est sélectivement réalisée.

Dans l'exemple de la Figure 1, les deux trains de gauche sur cette Figure sont à la fois en état à l'arrêt et sous tension. En revanche, les deux trains de droite de la même Figure 1 se trouvent en état en service et sous tension.

Les systèmes internes de stockage d'énergie électrique 24 des trains 16 en état à l'arrêt et sous tension sont propres à recevoir et stocker de l'énergie en provenance de l'alimentation 14 et à renvoyer cette énergie à travers l'alimentation 14.

Dès lors que plusieurs trains 16 sont en état en service, le pourcentage de trains 16 du réseau 10 à la fois en état à l'arrêt et sous tension est compris entre 1% et 10%, et vaut notamment 10%.

A noter que lorsqu'aucun train 16 n'est en état en service, il est avantageux de ne maintenir aucun train 16 en état à l'arrêt et sous tension. Ceci est par exemple le cas lorsqu'aucun passager n'emprunte les trains 16, ce qui est généralement le cas la nuit.

Avantageusement, le pourcentage de trains 16 en état à l'arrêt et sous tension est déterminé relativement à un certain nombre de critères, comme par exemple la fréquentation du réseau ferroviaire 10.

Ainsi, au cours d'une heure dite « de pointe », il y a statistiquement toujours assez de trains 16 en état en service pour consommer l'énergie électrique de freinage générée par les trains 16.

A l'inverse, aux heures creuses, la probabilité qu'un train 16 soit consommateur d'énergie électrique alors qu'un autre train 16 est fournisseur diminue.

Aussi, au cours des heures de pointe, le besoin en trains 16 en état à l'arrêt et sous tension dans le réseau ferroviaire 10 est plus faible qu'au cours des heures dites « creuses » du réseau 10.

Lors des heures de pointe du réseau 10, le pourcentage des trains 16 à la fois dans l'état à l'arrêt et sous tension est compris entre 1% et 10%, et vaut notamment 5%.

Lors des heures creuses du réseau 10, le nombre de trains 16 la fois dans l'état à l'arrêt et sous tension est compris entre 5 et 10%, et vaut notamment 10%.

Le fonctionnement d'un réseau ferroviaire 10 selon l'invention et le procédé 40 de transfert d'énergie entre les trains 16 de ce réseau ferroviaire 10 vont maintenant être décrits, notamment en référence aux Figures 1 et 2.

Dans le réseau ferroviaire 10, lorsqu'un train 16 en état en service freine lors d'une étape de freinage 310, l'énergie générée par le bloc moteur réversible 32 du train 16 est envoyée en totalité ou en partie à destination de son système interne de stockage d'énergie électrique 24 et/ou à l'alimentation 14.

Les critères déterminant la destination de l'énergie électrique générée lors du freinage sont connus de l'homme du métier et comprennent notamment l'impédance des caténaires 18 - à l'origine d'une dissipation de l'énergie lors de son transit sur l'alimentation 14 -. Une impédance forte, résultant par exemple de la vétusté des caténaires 18, n'est pas souhaitable, et l'énergie générée lors du freinage du train 16 sera alors préférentiellement stockée dans le système interne de stockage d'énergie électrique 24 du train 16.

L'énergie électrique générée lors de l'étape de freinage 310 du train 16 fournie à l'alimentation 14 est alors captée :
- par les moyens 22 de propulsion et/ou les systèmes auxiliaire 25 et basse-tension 27 d'un ou plusieurs autres trains 16 en état de service du réseau 10 pour leur fonctionnement ou par le système interne de stockage d'énergie électrique 24 du ou de ces trains 16 pour stockage, et/ou
- par un ou plusieurs systèmes fixes réversibles de stockage d'énergie 19, et/ou
- par le système interne de stockage d'énergie électrique 24 d'un ou plusieurs trains 16 se trouvant à la fois à l'arrêt et sous tension lors d'une étape de stockage 320, le système interne de stockage d'énergie électrique 24 du ou de chacun de ces trains 16 étant alors toujours raccordé à l'alimentation 14.

Au cours d'une étape de fourniture 330, tout ou partie de l'énergie électrique stockée lors de l'étape de stockage 320 dans le système interne de stockage d'énergie électrique 24 du ou de chaque train 16 à la fois en état d'arrêt et sous tension est renvoyée via l'alimentation 14 à destination d'un train 16 en état de service et sous tension pour son fonctionnement, comme décrit ci-dessus.

Le réseau ferroviaire 10 selon l'invention permet ainsi de disposer de systèmes de stockage d'énergie électrique supplémentaires sans avoir à ajouter physiquement de nouveaux systèmes de stockage indépendants le long de la voie 12 et sans avoir à modifier les systèmes de stockage d'énergie électrique préexistants.

Le coût associé à l'augmentation de la capacité de stockage d'énergie électrique résultant du freinage à récupération dans le réseau ferroviaire 10 selon l'invention est ainsi sensiblement diminué.

En outre, la quantité d'énergie électrique transitant dans l'alimentation 14 et provenant du freinage à récupération des trains 16 étant augmentée, l'énergie électrique que doivent fournir les sources d'alimentation ainsi que les pics de courant et de tension dans les caténaires 18 sont diminués d'autant.

Plus particulièrement, le réseau ferroviaire 10 selon l'invention permet une amélioration particulièrement tangible du bilan énergétique du réseau ferroviaire 10 lors des heures de basse fréquentation du réseau, comme indiqué précédemment.

Enfin, et de manière connue, les sous-stations fixes réversibles 19 sont des dispositifs coûteux qui ne restituent à l'alimentation 14 un courant de qualité suffisante en termes de contenu harmonique qu'au prix de dispositifs de filtrage encombrants et coûteux, à l'inverse des systèmes internes de stockage d'énergie équipant les trains, qui restituent un courant de bonne qualité et nécessitant peu de transformations avant d'être propre à utilisation.

Le stockage d'énergie électrique dans les systèmes internes de stockage d'énergie électrique 24 des trains 16 plutôt que dans les sous-stations fixes réversibles 19 permet donc d'améliorer la qualité de l'énergie électrique circulant dans l'alimentation 14.

En variante (non représentée), l'alimentation 14 comprend un ou plusieurs rails d'alimentation en lieu et place de la ou les caténaires 18.

De tels rails sont disposés au sol parallèlement à la voie 12.

En variante, en référence à la Figure 3, les moyens 20 de raccordement d'au moins un train 16 comprennent un dispositif 438 propre à inhiber le raccordement des moyens 22 de propulsion à l'alimentation 14 lorsque le train 16 est sous tension et que son système interne de stockage d'énergie électrique 24 est lui raccordé à l'alimentation 14.

A cet effet, le dispositif 438 comprend un interrupteur pilotable 440 agencé entre les câbles électriques 28 et les moyens 22 de propulsion et propre à déconnecter les moyens 22 de propulsion de l'alimentation 14 et du système interne de stockage d'énergie électrique 24 lorsque le train 16 est sous tension et en état à l'arrêt.

Cette variante est avantageusement utilisée pour minimiser le nombre d'organes sous tension des trains 16 en état à l'arrêt qui sont alors mis sous tension. Ceci permet plus particulièrement le maintien hors tension des moyens 22 de propulsion d'un train 16 sous tension, ce qui peut s'avérer nécessaire pour procéder à des opérations de maintenance sur les moyens 22 de propulsion par exemple, tout en maintenant le système interne de stockage d'énergie électrique 24 du train 16 raccordé à l'alimentation 14 pour la réception, le stockage et la fourniture d'énergie aux trains 16 en état en service dans le réseau ferroviaire 10.

En variante, un train 16 en état à l'arrêt est successivement mis sous tension et hors tension, ou inversement, pour des durées déterminées en fonction de la capacité de stockage d'énergie électrique requise dans le réseau ferroviaire 10.

Le train 16 à l'arrêt sera alors mis hors tension lorsque la capacité de stockage de son système interne de stockage d'énergie électrique 24 n'est pas requise, et mis sous tension lorsque celle-ci s'avère nécessaire pour stocker l'énergie résultant du freinage des trains 16 en service.

## Revendications

1. Réseau ferroviaire (10) du type comportant :
- une voie (12),
- une alimentation du réseau en énergie (14), et
- plusieurs trains (16), chaque train (16) comportant :
- des moyens de propulsion (22) propres à générer de l'énergie électrique par freinage,
- un système interne de stockage d'énergie électrique (24) conçu pour le stockage d'énergie électrique en provenance des moyens de propulsion (22) dudit train (16) et de l'alimentation du réseau en énergie (14), et pour la fourniture d'énergie électrique audit train (16) et à ladite alimentation (14),
- un ensemble d'équipements auxiliaires (25), et
- des moyens (20) de raccordement du train (16) à l'alimentation du réseau en énergie (14), chaque train (16) se trouvant sous tension lorsqu'il est raccordé à l'alimentation du réseau en énergie (14) via les moyens (20) de raccordement, son système interne de stockage d'énergie électrique (24) étant alors raccordé à ladite alimentation (14), et hors tension lorsqu'il ne l'est pas, chaque train (16) étant propre à passer entre un état en service dans lequel son ensemble d'équipements auxiliaires (25) est connecté à l'alimentation du réseau en énergie (14) ou au système interne de stockage d'énergie électrique (24) dudit train (16) et le train (16) est propre à se déplacer sur la voie (12), et un état à l'arrêt dans lequel ledit ensemble d'équipements auxiliaires (25) est déconnecté de l'alimentation en énergie du réseau (14) et du système interne de stockage d'énergie électrique (24) et le train (16) est impropre à se déplacer sur la voie (12),
**caractérisé en ce qu'**au moins l'un des trains (16) est à la fois dans l'état à l'arrêt et sous tension, son système interne de stockage d'énergie électrique (24) étant raccordé à l'alimentation du réseau en énergie (14).

2. Réseau (10) selon la revendication 1, **caractérisé en ce que** dès lors que plusieurs trains (16) du réseau ferroviaire (10) sont en état en service, le pourcentage des trains (16) du réseau ferroviaire (10) à la fois dans l'état à l'arrêt et sous tension est compris entre 1% et 10%, et vaut notamment 10%.

3. Réseau (10) selon la revendication 1 ou 2, **caractérisé en ce que** lors des heures de pointe du réseau ferroviaire (10), le pourcentage des trains (16) du réseau ferroviaire (10) à la fois dans l'état à l'arrêt et sous tension est compris entre 1% et 10%, et vaut notamment 5%

4. Réseau (10) selon l'une quelconque des revendications précédentes, **caractérisé en ce que** lors des heures creuses du réseau (10), le pourcentage de trains (16) du réseau ferroviaire (10) la fois dans l'état à l'arrêt et sous tension est compris entre 5% et 10%, et vaut notamment 10%.

5. Réseau (10) selon l'une quelconque des revendications précédentes, **caractérisé en ce qu'**il comprend au moins un emplacement de stationnement prolongé (38) choisi parmi le groupe suivant : un atelier, un site de maintenance, un parking, un garage, un dépôt, une gare, et **en ce que** le ou chaque train (16) à la fois dans état à l'arrêt et sous tension est situé dans ledit au moins un emplacement de stationnement prolongé (38).

6. Réseau (10) selon l'une quelconque des revendications précédentes, **caractérisé en ce que** les moyens (20) de raccordement d'au moins l'un des trains (16) comprennent un interrupteur pilotable (440) propre à déconnecter les moyens (22) de propulsion de l'alimentation du réseau en énergie (14) et de son système interne de stockage d'énergie électrique (24) lorsque ledit train (16) est sous tension et en état à l'arrêt.

7. Réseau (10) selon l'une quelconque des revendications précédentes, **caractérisé en ce que** l'ensemble d'équipements auxiliaires (25) de chaque train (16) comprend un interrupteur commandable auxiliaire (35) propre à connecter ledit ensemble d'équipements auxiliaires (25) à l'alimentation du réseau en énergie (14) et/ou au système interne de stockage d'énergie électrique (24) d'une part, et déconnecter ledit ensemble d'équipements auxiliaires (25) de l'alimentation du réseau en énergie (14) et du système interne de stockage d'énergie électrique (24) d'autre part.

8. Procédé (40) d'échange d'énergie sur un réseau ferroviaire (10) tel que défini selon l'une quelconque des revendications précédentes, chaque train (16) du réseau (10) se trouvant :
- sous tension lorsqu'il est raccordé à l'alimentation du réseau en énergie (14) via les moyens (20) de raccordement, son système interne de stockage d'énergie électrique (24) étant raccordé à ladite alimentation (14),
- hors tension lorsqu'il n'est pas raccordé à l'alimentation du réseau en énergie (14) via les moyens (20) de raccordement, son système interne de stockage d'énergie électrique (24) n'étant pas raccordé à ladite alimentation (14),
- dans l'état en service lorsque son système d'équipements auxiliaires (25) est connecté à l'alimentation du réseau en énergie (14) ou à son système interne de stockage d'énergie électrique (24), et le train (16) est propre à se déplacer sur la voie (12), ses moyens de propulsion (22) étant propres à générer de l'énergie électrique par freinage,
- dans l'état à l'arrêt lorsque son système d'équipements auxiliaires (25) est déconnecté de l'alimentation en énergie du réseau (14) et de son système interne de stockage d'énergie électrique (24) et le train est impropre à se déplacer sur la voie (12),
le procédé (40) d'échange d'énergie comprenant:
- une étape de freinage (310) d'un train (16) dans l'état en service et sous tension,
- une étape de stockage (320) de tout ou partie de l'énergie électrique résultante du freinage dudit train (16) dans le système interne de stockage d'énergie électrique (24) d'un ou plusieurs train (16) en état à l'arrêt et sous tension,
- une étape de fourniture (330) de tout ou partie de l'énergie stockée dans le système interne de stockage d'énergie électrique (24) du ou de chaque train (16) à la fois en état à l'arrêt et sous tension à un ou plusieurs autres trains (16) en état en service du réseau ferroviaire (10) via l'alimentation du réseau en énergie (14).

## Patentansprüche

1. Eisenbahnnetz (10) des Typs, der aufweist:
- ein Gleis (12),
- eine Versorgung des Netzes mit Energie (14) und
- mehrere Züge (16), wobei jeder Zug (16) aufweist:
- Antriebsmittel (22), die geeignet sind, durch Bremsen elektrische Energie zu erzeugen,
- ein internes System zum Speichern von elektrischer Energie (24), das für das Speichern von elektrischer Energie, die von den Antriebsmitteln (22) des Zuges (16) und von der Versorgung des Netzes mit Energie (14) stammt, und für das Bereitstellen von elektrischer Energie an den Zug (16) und an die Versorgung (14) eingerichtet ist,
- eine Baugruppe von Zusatzausrüstungen (25) und
- Mittel (20) zum Anschließen des Zuges (16) an die Versorgung des Netzes mit Energie (14), wobei sich jeder Zug (16) unter Spannung befindet, wenn er über die Anschlussmittel (20) an die Versorgung des Netzes mit Energie (14) angeschlossen ist, wobei sein internes System zum Speichern von elektrischer Energie (24) dann an die Versorgung (14) angeschlossen ist, und spannungsfrei ist, wenn er es nicht ist, wobei jeder Zug (16) in der Lage ist, zwischen einem Betriebszustand, in dem seine Baugruppe von Zusatzausrüstungen (25) an die Versorgung des Netzes mit Energie (14) oder an das interne System zum Speichern von elektrischer Energie (24) des Zuges (16) angeschlossen ist und der Zug (16) in der Lage ist, sich auf dem Gleis (12) fortzubewegen, und einem Anhaltezustand umzuschalten, in dem die Baugruppe von Zusatzausrüstungen (25) von der Versorgung des Netzes mit Energie (14) und dem internen System zum Speichern von elektrischer Energie (24) getrennt ist und der Zug (16) nicht in der Lage ist, sich auf dem Gleis (12) fortzubewegen,
**dadurch gekennzeichnet, dass** sich mindestens einer der Züge (16) gleichzeitig im Anhaltezustand und unter Spannung befindet, wobei sein internes System zum Speichern von elektrischer Energie (24) an die Versorgung des Netzes mit Energie (14) angeschlossen ist.

2. Netz (10) gemäß Anspruch 1, **dadurch gekennzeichnet, dass** ab dem Zeitpunkt, zu dem mehrere Züge (16) des Eisenbahnnetzes (10) im Betriebszustand sind, der Prozentsatz der Züge (16) des Eisenbahnnetzes (10), die sich gleichzeitig im Anhaltezustand und unter Spannung befinden, zwischen 1% und 10% liegt und insbesondere 10% beträgt.

3. Netz (10) gemäß Anspruch 1 oder 2, **dadurch gekennzeichnet, dass** zu der Spitzenzeit des Eisenbahnnetzes (10) der Prozentsatz der Züge (16) des Eisenbahnnetzes (10), die sich gleichzeitig im Anhaltezustand und unter Spannung befinden, zwischen 1% und 10% liegt und insbesondere 5% beträgt.

4. Netz (10) gemäß irgendeinem der vorhergehenden Ansprüche, **dadurch gekennzeichnet, dass** zu den Randstunden des Netzes (10) der Prozentsatz von Zügen (16) des Eisenbahnnetzes (10), die sich gleichzeitig im Anhaltezustand und unter Spannung befinden, zwischen 5% und 10% liegt und insbesondere 10% beträgt.

5. Netz (10) gemäß irgendeinem der vorhergehenden Ansprüche, **dadurch gekennzeichnet, dass** es mindestens einen Platz zum langanhaltenden Parken (38) aufweist, der aus der folgenden Gruppe ausgewählt ist: einer Werkstatt, einem Instandhaltungsort, einem Parkplatz, einer Garage, einem Depot, einem Bahnhof, und dass sich der oder jeder Zug (16), der sich gleichzeitig im Anhaltezustand und unter Spannung befindet, an dem mindestens einen Platz zum langanhaltenden Parken (38) befindet.

6. Netz (10) gemäß irgendeinem der vorhergehenden Ansprüche, **dadurch gekennzeichnet, dass** die Mittel (20) zum Anschließen mindestens eines der Züge (16) einen steuerbaren Schalter (440) aufweisen, der in der Lage ist, die Antriebsmittel (22) von der Versorgung des Netzes mit Energie (14) und von seinem internen System zum Speichern von elektrischer Energie (24) zu trennen, wenn der Zug (16) unter Spannung und im Anhaltezustand ist.

7. Netz (10) gemäß irgendeinem der vorhergehenden Ansprüche, **dadurch gekennzeichnet, dass** die Baugruppe von Zusatzausrüstungen (25) jedes Zuges (16) einen steuerbaren Hilfsschalter (35) aufweist, der in der Lage ist, einerseits die Baugruppe von Zusatzausrüstungen (25) an die Versorgung des Netzes mit Energie (14) und/oder an das interne System zum Speichern von elektrischer Energie (24) anzuschließen und andererseits die Baugruppe von Zusatzausrüstungen (25) von der Versorgung des Netzes mit Energie (14) und von dem internen System zum Speichern von elektrischer Energie (24) zu trennen.

8. Verfahren (40) zum Austauschen von Energie in einem Eisenbahnnetz (10) wie es gemäß irgendeinem der vorhergehenden Ansprüche definiert ist, wobei jeder Zug (16) des Netzes (10):
- unter Spannung ist, wenn er über die Anschlussmittel (20) an die Versorgung des Netzes mit Energie (14) angeschlossen ist, wobei sein internes System zum Speichern von elektrischer Energie (24) an die Versorgung (14) angeschlossen ist,
- spannungsfrei ist, wenn er nicht über die Anschlussmittel (20) an die Versorgung des Netzes mit Energie (14) angeschlossen ist, wobei sein internes System zum Speichern von elektrischer Energie (24) nicht an die Versorgung (14) angeschlossen ist,
- im Betriebszustand ist, wenn sein System von Zusatzausrüstungen (25) an die Versorgung des Netzes mit Energie (14) oder an sein internes System zum Speichern von elektrischer Energie (24) angeschlossen ist und der Zug (16) in der Lage ist, sich auf dem Gleis (12) fortzubewegen, wobei seine Antriebsmittel (22) in der Lage sind, durch Bremsen elektrische Energie zu erzeugen,
- im Anhaltezustand ist, wenn sein System von Zusatzausrüstungen (25) von der Versorgung des Netzes mit Energie (14) und von seinem internen System zum Speichern von elektrischer Energie (24) getrennt ist und der Zug nicht in der Lage ist, sich auf dem Gleis (12) fortzubewegen,
wobei das Verfahren (40) zum Austauschen von Energie aufweist:
- einen Schritt des Bremsens (310) eines Zuges (16) im Betriebszustand und unter Spannung,
- einen Schritt des Speicherns (320) der gesamten oder eines Teils der elektrischen Energie, die aus dem Bremsen des Zuges (16) resultiert, in dem internen System zum Speichern von elektrischer Energie (24) eines oder mehrerer Züge (16) im Anhaltezustand und unter Spannung,
- einen Schritt des Bereitstellens (330) der gesamten oder eines Teils der Energie, die in dem internen System zum Speichern von elektrischer Energie (24) des oder jedes Zuges (16) gespeichert ist, der gleichzeitig im Anhaltezustand und unter Spannung ist, an einen oder mehrere im Betriebszustand befindliche andere Züge (16) des Eisenbahnnetzes (10) über die Versorgung des Netzes mit Energie (14).

## Claims

1. Railway network (10) of the type comprising:
- a track (12),
- a network power supply (14), and
- a plurality of trains (16), each train (16) comprising:
- propulsion means (22) capable of generating electrical energy by braking,
- an internal electrical energy storage system (24) designed to store electrical energy originating from the propulsion means (22) of said train (16) and from the network power supply (14), and to supply electrical energy to said train (16) and to said supply (14),
- a set of auxiliary equipment (25), and
- means (20) for connecting the train (16) to the network power supply (14), each train (16) being supplied with energy when it is connected to the network power supply (14) *via* the connecting means (20), its internal electrical energy storage system (24) then being connected to said supply (14), and powered off when it is not connected, each train (16) being capable of passing between an operational state in which its set of auxiliary equipment (25) is connected to the network power supply (14) or to the internal electrical energy storage system (24) of said train (16) and the train (16) is capable of moving on the track (12), and a stopped state in which said set of auxiliary equipment (25) is disconnected from the network power supply (14) and from the internal electrical energy storage system (24) and the train (16) is not capable of moving on the track (12),
**characterised in that** at least one of the trains (16) is both in the stopped state and supplied with energy, its internal electrical energy storage system (24) being connected to the network power supply (14).

2. Network (10) according to claim 1, **characterised in that**, when a plurality of trains (16) of the railway network (10) are in the operational state, the percentage of trains (16) of the railway network (10) that are both in the stopped state and supplied with energy is between 1% and 10% and is especially 10%.

3. Network (10) according to claim 1 or 2, **characterised in that**, during peak hours of the railway network (10), the percentage of trains (16) of the railway network (10) that are both in the stopped state and supplied with energy is between 1% and 10% and is especially 5%.

4. Network (10) according to any one of the preceding claims, **characterised in that**, during off-peak times of the network (10), the percentage of trains (16) of the railway network (10) that are both in the stopped state and supplied with energy is between 5% and 10% and is especially 10%.

5. Network (10) according to any one of the preceding claims, **characterised in that** it comprises at least one prolonged parking location (38) chosen from the following group: a workshop, a maintenance site, a parking area, a garage, a depot and a station, and **in that** the or each train (16) that is both in the stopped state and supplied with energy is situated in said at least one prolonged parking location (38).

6. Network (10) according to any one of the preceding claims, **characterised in that** the connecting means (20) of at least one of the trains (16) comprise a controllable switch (440) which is capable of disconnecting the propulsion means (22) from the network power supply (14) and from its internal electrical energy storage system (24) when said train (16) is supplied with energy and in the stopped state.

7. Network (10) according to any one of the preceding claims, **characterised in that** the set of auxiliary equipment (25) of each train (16) comprises an auxiliary controllable switch (35) capable of connecting said set of auxiliary equipment (25) to the network power supply (14) and/or to the internal electrical energy storage system (24), on the one hand, and of disconnecting said set of auxiliary equipment (25) from the network power supply (14) and from the internal electrical energy storage system (24), on the other hand.

8. Method (40) of energy exchange on a railway network (10) as defined according to any one of the preceding claims, each train (16) of the network (10) being:
- supplied with energy when it is connected to the network power supply (14) *via* the connecting means (20), its internal electrical energy storage system (24) being connected to said supply (14),
- powered off when it is not connected to the network power supply (14) *via* the connecting means (20), its internal electrical energy storage system (24) not being connected to said supply (14),
- in the operational state when its auxiliary equipment system (25) is connected to the network power supply (14) or to its internal electrical energy storage system (24), and the train (16) is capable of moving on the track (12), its propulsion means (22) being capable of generating electrical energy by braking,
- in the stopped state when its auxiliary equipment system (25) is disconnected from the network power supply (14) and from its internal electrical energy storage system (24) and the train is not capable of moving on the track (12),
the method (40) of energy exchange comprising:
- a step of braking (310) a train (16) that is in the operational state and supplied with energy,
- a step of storing (320) all or some of the electrical energy resulting from the braking of said train (16) in the internal electrical energy storage system (24) of one or more trains (16) that are in the stopped state and supplied with energy,
- a step of supplying (330) all or some of the energy stored in the internal electrical energy storage system (24) of the or each train (16) that is both in the stopped state and supplied with energy to one or more other trains (16) of the railway network (10) that are in the operational state *via* the network power supply (14).
